# EUROPEAN PATENT APPLICATION

(11) **EP 3 820 195 A1**
(43) Date of publication of application: **12.05.2021**
(21) Application number: 18925577.1
(22) Date of filing: 06.07.2018
(51) Int. Cl.: H04W 28/22, H04W 8/22, H04W 72/04

(54) **USER EQUIPMENT AND WIRELESS COMMUNICATION METHOD**

(71) Applicant: NTT DOCOMO, INC., Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/025789
(87) International publication number: WO 2020/008649

(57) **Abstract**

To appropriately perform communication even when a plurality of processing times are introduced, one aspect of a user terminal according to the present disclosure includes: a transmitting section that transmits UE capability information that indicates that a second processing time shorter than a first processing time is supported for a given operation; and a control section that applies the second processing time to the given operation after the UE capability information is transmitted or after the application of the second processing time is configured.

## Description

### Technical Field

The present disclosure relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (LTE Rel. 8 and 9), LTE-Advanced (LTE-A and LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) are also studied.

In legacy LTE systems (e.g., LTE Rel. 8 to 14), a user terminal (UE: User Equipment) controls reception of a downlink shared channel (e.g., PDSCH: Physical Downlink Shared Channel) based on Downlink Control Information (also referred to as, for example, DCI or a DL assignment) conveyed via a downlink control channel (e.g., PDCCH: Physical Downlink Control Channel).

Furthermore, the UE controls transmission of an uplink shared channel (e.g., PUSCH: Physical Uplink Shared Channel) based on the DCI (also referred to as, for example, a UL grant). Furthermore, the UE transmits uplink control information such as retransmission control information (also referred to as, for example, HARQ-ACK, ACK/NACK and A/N) for DL data (e.g., PDSCH) at a given timing by using an uplink control channel (PUCCH: Physical Uplink Control Channel) or an uplink shared channel.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

Future radio communication systems (also referred to as, for example, 5G, 5G+, NR, Rel. 15 and subsequent releases) assume that an identical UE performs transmission of a plurality of communication (also referred to as, for example, use cases, services and communication types) of different requirements.

In this regard, the requirement only needs to relate to at least one of, for example, latency, reliability, a capacity, a speed and performance. Furthermore, the communication of the different requirements includes, for example, a high speed and a large capacity (e.g., eMBB: enhanced Mobile Broad Band), massive terminals (e.g., mMTC: massive Machine Type Communication), and ultra reliability and low latency (e.g., URLLC: Ultra Reliable and Low Latency Communications).

Thus, it is also assumed that, when the communication of the different requirements is performed, different processing times are applied to given operations according to, for example, processing capability of each UE (also referred to as UE capability).

However, when communication is performed by using a plurality of processing times, how to perform control matters. However, for example, a specific operation is not sufficiently studied. When communication that uses a plurality of processing times is not appropriately performed, there is a risk that a throughput lowers or communication quality deteriorates.

It is therefore one of objects of the present disclosure to provide a user terminal and a radio communication method that can appropriately perform communication even when a plurality of processing times are introduced.

### Solution to Problem

A user terminal according to one aspect of the present disclosure includes: a transmitting section that transmits UE capability information that indicates that a second processing time shorter than a first processing time is supported for a given operation; and a control section that applies the second processing time to the given operation after the UE capability information is transmitted or after the application of the second processing time is configured.

### Advantageous Effects of Invention

According to one aspect of the present disclosure, it is possible to appropriately perform communication even when a plurality of processing times are introduced.

### Brief Description of Drawings

Figs. 1A and 1B are diagrams illustrating one example of a case where different processing times are applied.
Figs. 2A and 2B are diagrams illustrating another example of the case where different processing times are applied.
Fig. 3 is a diagram illustrating one example of an application timing of UE capability #2.
Fig. 4 is a diagram illustrating another example of the application timing of the UE capability #2.
Fig. 5 is a diagram illustrating one example of skip control of a given operation.
Fig. 6 is a diagram illustrating another example of the skip control of the given operation.
Fig. 7 is a diagram illustrating one example of a schematic configuration of a radio communication system according to the present embodiment.
Fig. 8 is a diagram illustrating one example of an overall configuration of a radio base station according to the present embodiment.
Fig. 9 is a diagram illustrating one example of a function configuration of the radio base station according to the present embodiment.
Fig. 10 is a diagram illustrating one example of an overall configuration of a user terminal according to the present embodiment.
Fig. 11 is a diagram illustrating one example of a function configuration of the user terminal according to the present embodiment.
Fig. 12 is a diagram illustrating one example of hardware configurations of the radio base station and the user terminal according to the present embodiment.

### Description of Embodiments

It is studied for a future radio communication system (e.g., NR) to apply a plurality of processing times as processing times of a UE. In one example, it is thought to introduce a first processing time and a second processing time shorter than the first processing time.

In this case, UEs that have only UE capability for supporting the first processing time and UEs that have UE capability for supporting the second processing time may exist in the future radio communication system. The UE capability for supporting the first processing time may be referred to as primary UE capability, UE capability #1, first UE capability, normal UE capability or general UE capability. The UE capability for supporting the second processing time may be referred to as secondary UE capability, UE capability #2, second UE capability, low latency UE capability, extended UE capability or enhanced UE capability.

In addition, there may be employed a configuration where the UE capability (also referred to as the UE capability #2 below) for supporting the second processing time always has UE capability (also referred to as the UE capability #1 below) for supporting the first processing time. Furthermore, all terminals may be configured to have at least the UE capability #1 in the radio communication system.

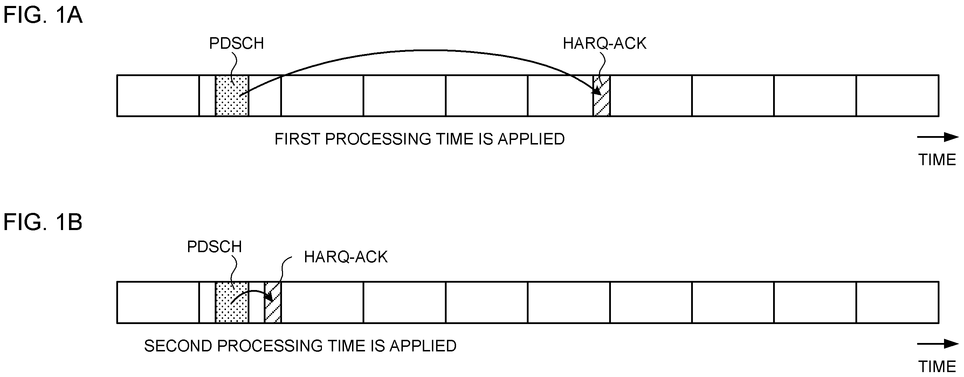

The second processing time is configured shorter than the first processing time. For example, a feedback timing of HARQ-ACK for a downlink shared channel (PDSCH) may be controlled based on a processing time (or UE capability) supported by the UE. That is, a duration N1 (e.g., minimum duration) taken until the HARQ-ACK is transmitted after the UE transmits the PDSCH is configured differently based on the first processing time and the second processing time (see Fig. 1).

Fig. 1A illustrates one example of a case where the first processing time is applied. Fig. 1B illustrates one example of a case where the second processing time is applied. As illustrated in Fig. 1, in a case where the second processing time is applied (or supported), the UE can shorten the duration N1 taken until HARQ-ACK is transmitted after a PDSCH is received compared to a case where the first processing time is applied.

For example, the UE that has the UE capability #2 has processing capability that makes it possible to finish HARQ-ACK transmission preparation the second processing time (N1) after the PDSCH is received. The second processing time (N1) may be defined per SubCarrier Spacing (SCS). In one example, when the SCS is 15 kHz, the second processing time may be 3 symbols (N1 = 3), and, when the SCS is 30 kHz, the second processing time may be 4.5 symbols (N1 = 4.5). Naturally, a value of the second processing time is not limited to this, and may be configured as appropriate according to, for example, other parameters.

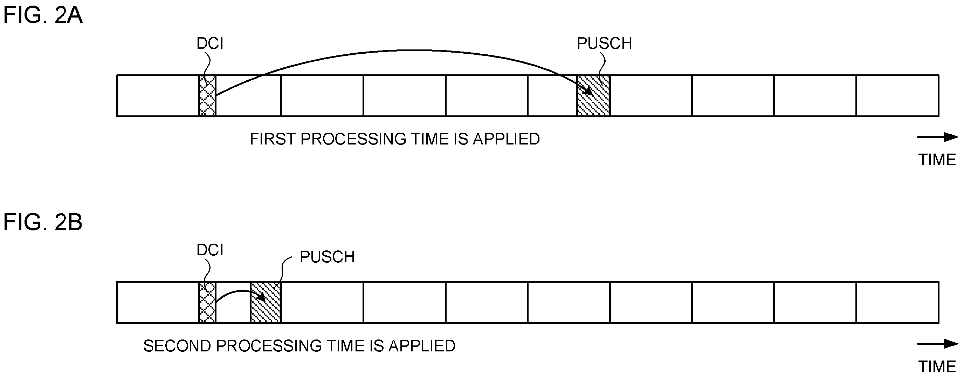

Furthermore, a transmission timing of an uplink shared channel (PUSCH) instructed by Downlink Control Information (DCI) may be controlled based on the processing timing (or the UE capability) supported by the UE. That is, a duration N2 (e.g., minimum duration) taken until the PUSCH is transmitted after the UE receives the DCI is configured differently based on the first processing time and the second processing time (see Fig. 2).

Fig. 2A illustrates one example of a case where the first processing time is applied. Fig. 2B illustrates one example of a case where the second processing time is applied. As illustrated in Fig. 2, in a case where the second processing time is applied (or supported), the UE can shorten the duration N2 taken until a PUSCH is transmitted after DCI is received compared to a case where the first processing time is applied.

For example, the UE that has the UE capability #2 has processing capability that makes it possible to finish PUSCH transmission preparation the second processing time (N2) after the DCI is received. The second processing time (N2) may be defined per SubCarrier Spacing (SCS). In one example, when the SCS is 15 kHz, the second processing time may be 5 symbols (N2 = 5), and, when the SCS is 30 kHz, the second processing time may be 5.5 symbols (N2 = 5.5). Naturally, a value of the second processing time is not limited to this, and may be configured as appropriate according to, for example, other parameters.

Thus, by introducing a plurality of processing times, and controlling communication based on a processing time (or UE capability) supported by the UE, it is possible to perform flexible control per UE according to a requirement.

However, when a plurality of processing times are introduced to perform communication, how to perform control matters. However, for example, a specific operation is not sufficiently studied. For example, it is thought that the UE that supports the second processing time (or the UE capability #2) transmits information that the UE supports the second processing time as UE capability information to a base station. However, how to control an application timing of the second processing time matters. When communication that uses a plurality of processing times is not appropriately performed, there is a risk that a throughput lowers or communication quality deteriorates.

Hence, the inventors of the present invention have focused on that the UE notifies the base station of the UE capability (e.g., UE capability #2) as one aspect of the present embodiment, and conceived controlling a timing to apply the second processing time based on a given condition.

Furthermore, the inventors of the present invention have focused on that there are a plurality of different operations as operations to which processing times of the UE are applied as another aspect of the present embodiment, and conceived controlling the respective operations to which the first processing time and the second processing time are applied.

The embodiment according to the present disclosure will be described in detail below with reference to the drawings. Each embodiment may be each applied alone or may be applied in combination. Furthermore, the following description cites an example of the first processing time (or the UE capability #1) and the second processing time (or the UE capability #2) shorter than the first processing time. However, the number of applicable processing times (or UE capabilities) is not limited to 2 types, and may be 3 types or more. Furthermore, processing times of the first processing time and the second processing time may be defined as the same value for part of operations (e.g., UE operation) of communication.

### (First Aspect)

According to the first aspect, an application timing of a second processing time associated with UE capability #2 is controlled based on a given condition.

The given condition for applying the second processing time may be one of a case (case 1) where a base station configures (or requests) application of the second processing time to a UE, or a case (case 2) where the UE notifies the base station of UE capability information. In the case 2, the base station does not need to configure (or request) application of the second processing time to the UE.

### <Case 1>

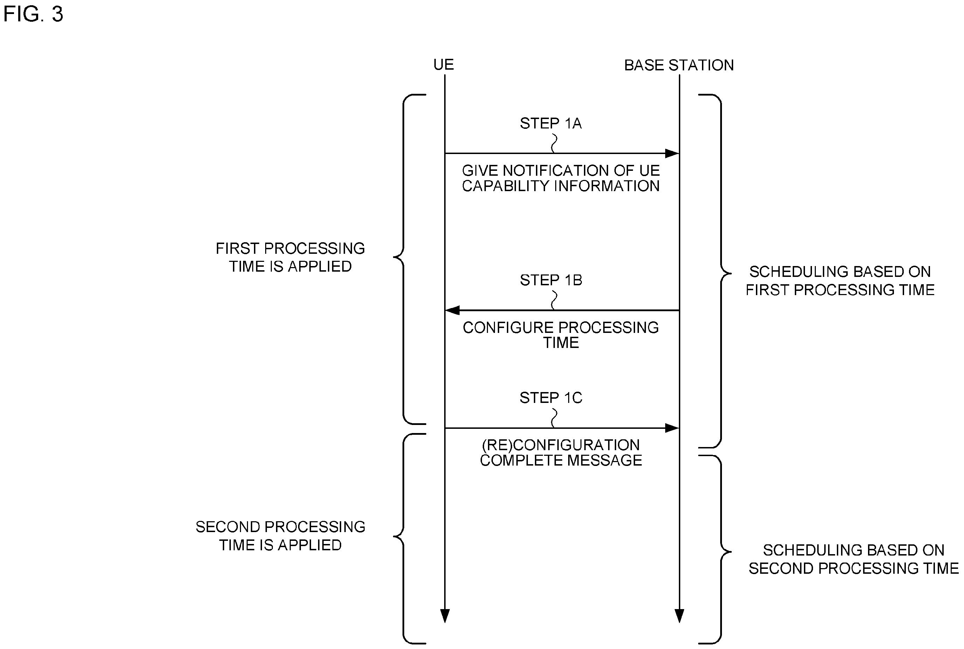

Fig. 3 illustrates one example of a case where, at least after the base station configures application of the second processing time associated with the UE capability #2, the UE controls a given operation by using the second processing time.

In Fig. 3, the UE that supports the UE capability #2 transmits information that the UE supports the UE capability #2 as UE capability information to the base station (or a network) (step 1A). In this case, the UE may separately transmit the information that the UE supports UE capability #1 as the UE capability information to the base station, or may not transmit the UE capability information related to the UE capability #1 to the base station.

The UE that does not support the UE capability #2 transmits information that the UE does not support the UE capability #2 or information that the UE supports the UE capability #1 to the base station, or does not transmit any information as the UE capability information related to processing capability.

The base station that has received the UE capability information (e.g., UE capability #2) from the UE configures application of the second processing time associated with the UE capability #2 to the UE (step 1B).

The UE transmits a message (e.g., Reconf complete message) that the configuration (or reconfiguration) has been completed to the base station based on the configuration (or a notification) from the base station (step 1C).

The UE performs control to apply the second processing time associated with the UE capability #2 to the given operation in or after step 1C. Alternatively, the UE may perform control to apply the second processing time to the given operation after the base station configures application of the second processing time (e.g., in or after step 1B).

The base station only needs to control scheduling assuming that the first processing time associated with the UE capability #1 is applied by a timing (step 1B) at which application of the second processing time associated with the UE capability #2 is configured to the UE, or a timing (step 1C) at which a configuration complete message is received from the UE. Furthermore, the base station may control scheduling assuming that the second processing time is applicable in or after step 1C (or step 1B).

Thus, by applying the second processing time at least after the base station configures application of the second processing time, the UE does not need to perform transmission/reception processing taking the second processing time into account at all times. As a result, it is possible to reduce a load of the transmission/reception processing in the UE.

When the base station does not configure application of the second processing time to the UE (when, for example, step 1B is not performed or the second processing time is not configured in step 1B), the UE may assume that the same processing time as the first processing time associated with the UE capability #1 is applied.

Furthermore, the second processing time may be configured commonly to DL and UL, or may be separately configured. Furthermore, the second processing time may be configured per UE operation.

Furthermore, during Carrier Aggregation (CA), the second processing time may be configured commonly to a plurality of CCs included in a plurality of cell groups (e.g., PUCCH groups), or may be separately configured per CC. Alternatively, during Dual Connectivity (DC), the second processing time may be configured commonly to a plurality of CCs included in a plurality of cell groups, or may be separately configured per CC.

### <Case 2>

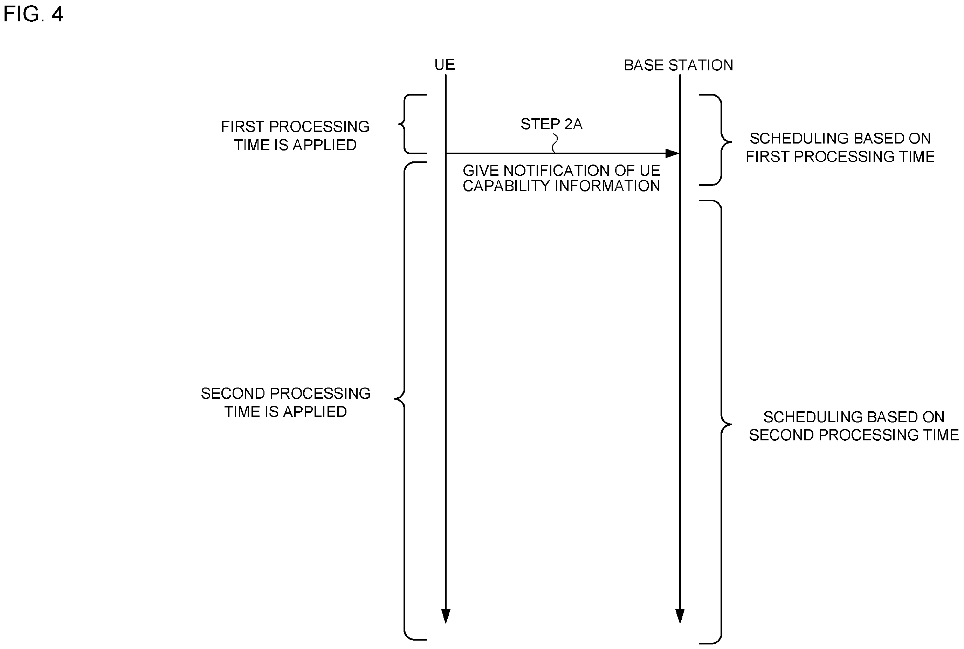

Fig. 4 illustrates one example of a case where, after the UE transmits UE capability information (UE capability #2) to the base station, the UE controls the given operation by using the second processing time.

In Fig. 4, the UE that supports the UE capability #2 transmits information that the UE supports the UE capability #2 as UE capability information to the base station (or the network) (step 2A). In this case, the UE may separately transmit information that the UE supports the UE capability #1 as UE capability information to the base station, or may not transmit the UE capability information related to the UE capability #1 to the base station.

The UE that does not support the UE capability #2 transmits information that the UE does not support the UE capability #2, or information that the UE supports the UE capability #1 to the base station, or does not transmit any information as the UE capability information related to the processing capability to the base station.

The UE may perform control to apply the second processing time associated with the UE capability #2 to the given operation in or after step 2A. In this case, the UE may control transmission/reception processing assuming that the base station performs scheduling based on the second processing time for the given operation after giving notification of the UE capability information.

After receiving the UE capability information (UE capability #2) from the UE (in or after step 2A), the base station may control scheduling assuming that the second processing time is applicable to the given operation.

Thus, by employing the configuration where the second processing time is applied based on the notification of the UE capability information (UE capability #2) from the UE to the base station, it is possible to reduce an information amount (e.g., steps 1B and 1C in Fig. 3) to be transmitted from the base station to the UE.

Furthermore, the UE may be configured to perform at least one of an operation related to a PDSCH and an operation related to a PUSCH within the second processing time associated with the UE capability #2 when the given condition is satisfied. The operation related to the PDSCH may be, for example, HARQ-ACK feedback for the PDSCH. Furthermore, the operation related to the PUSCH may be, for example, PUSCH transmission that is based on DCI for instructing UL transmission.

The given condition may be a case where that at least one of following conditions (or all conditions) is satisfied.
- A case where carrier aggregation is not applied
- A case where one numerology is applied to a PDCCH, a PDSCH and a PUSCH in a serving cell
- A case where allocation of the PDSCH or the PUSCH is controlled based on a given mapping type (e.g., mapping type A or B)
- A case where UCI is not multiplexed on the PUSCH
- A case where a C-RNTI is applied to the PDCCH for transmitting DCI (a CRC is scrambled by the C-RNTI)

When the given condition is not satisfied, the UE may assume that application of the second processing time to the operation related to the PDSCH and the operation related to the PUSCH is not requested. In this case, the UE may be configured to perform at least one of the operation related to the PDSCH and the operation related to the PUSCH within the first processing time associated with the UE capability #1.

### <Other Case>

The above-described case 1 and case 2 may be used in combination. For example, after transmitting the UE capability information (UE capability #2) to the base station, the UE applies the above case 1 when the base station configures application of the second processing time to the UE. On the other hand, after transmitting the UE capability information (UE capability #2) to the base station, the UE may be configured to apply the above case 2 when the base station does not configure application of the second processing time to the UE within a given duration.

### (Second Aspect)

The second aspect will describe a UE operation to which a second processing time associated with UE capability #2 is applied. In addition, a configuration described below is applicable to each of the case 1, the case 2 and the other case of the first aspect.

When the UE has the second processing time (or the UE capability #2), the UE performs at least one of an operation related to a PDSCH and an operation related to a PUSCH based on the second processing time (N1 or N2) associated with the UE capability #2. N1 corresponds to a processing time of the operation related to the PDSCH, and N2 corresponds to a processing time of the operation related to the PUSCH.

The operation related to the PDSCH may be, for example, HARQ-ACK feedback for the PDSCH. Furthermore, the operation related to the PUSCH may be, for example, PUSCH transmission that is based on DCI for instructing UL transmission.

On the other hand, how to control a processing time to be applied to processing related to the HARQ-ACK feedback for the PDSCH and the processing related to the PUSCH transmission that is based on the DCI for instructing the UL transmission matters. Alternatively, how to control a processing time to be applied to operations other than the operation related to the PDSCH and the operation related to the PUSCH matters. The processing times applied by the UE will be described below.

### <Aspect 1>

Even when the second processing time associated with the UE capability #2 is configured to DL or UL, the UE does not apply the second processing time to the processing related to HARQ-ACK feedback for the PDSCH or the processing related to PUSCH transmission that is based on the DCI for instructing UL transmission.

The processing related to the HARQ-ACK feedback for the PDSCH or the processing related to the PUSCH transmission that is based on the DCI may be at least one of application of UCI on PUSCH for multiplexing UCI (e.g., HARQ-ACK) on the PUSCH to transmit, application of a Timing Advance (TA) command, and application of the TPC command.

The TA commands is a command that indicates a transmission timing value of an uplink channel, and is included in an MAC control element. The TA command may be signaled by an MAC layer from the radio base station to the user terminal. The TPC command may indicate an increase/decrease value of UL transmission power (e.g., a PUSCH, a PUCCH or an SRS), and may be included in, for example, DCI that is transmitted on a PDCCH.

When, for example, multiplexing the UCI (e.g., HARQ-ACK) on the PUSCH to transmit, the UE does not apply the second processing time to an HARQ-ACK feedback timing and a PUSCH transmission (or PUSCH scheduling) timing. In this case, the UE may apply the same time as the first processing time (or a time longer than a first processing time) to the HARQ-ACK feedback timing and the PUSCH transmission (or PUSCH scheduling) timing.

Furthermore, the UE may control application of the TA command, too, based on the first processing time. Similarly, the UE may control application of the TPC command, too, based on the first processing time. In this case, it is possible to suppress an increase in a UE processing load for using the first processing time as for a transmission condition while improving a communication throughput using the second processing time for HARQ-ACK feedback and PUSCH transmission that is based on DCI.

A network (e.g., base station) controls, for example, scheduling by taking into account UE capability information (UE capability #2) reported from the UE. When, for example, UCI is transmitted without being multiplexed on a PUSCH, the base station controls a transmission timing of HARQ-ACK for a PDSCH and a transmission timing of the PUSCH that is based on a UL grant, based on the second processing time of the UE capability #2. In other cases (e.g., UCI on PUSCH is used), the base station may control the transmission timing of the HARQ-ACK for the PDSCH and the transmission timing of the PUSCH that is based on the UL grant, based on the first processing time of UE capability #1.

Furthermore, the base station may apply the same timing (e.g., the timing based on the first processing time) to at least one of the TA command and the TPC command irrespectively of whether or not the UE reports capability information (UE capability #2).

The UE may not assume a processing time (e.g., second processing time) shorter than the first processing time is applied to at least one (or all) of HARQ-ACK transmission that uses the PUSCH, application of the TA command and application of the TPC command.

### <Aspect 2>

When the second processing time associated with the UE capability #2 is configured to DL or UL, the UE applies the second processing time to processing related to HARQ-ACK feedback for a PDSCH or processing related to PUSCH transmission that is based on DCI for instructing UL transmission.

When, for example, multiplexing UCI on a PUSCH to transmit, the UE that supports the UE capability #2 applies the second processing time to an HARQ-ACK feedback timing and a PUSCH transmission (or PUSCH scheduling) timing. In this case, the HARQ-ACK is multiplexed on the PUSCH to transmit based on the second processing time (N1 or N2) associated with the UE capability #2.

On the other hand, when the UE does not support the UE capability #2, the UE does not assume that the HARQ-ACK is multiplexed on the PUSCH based on the second processing time (N1 or N2) associated with the UE capability #2. In this case, the UE may multiplex the HARQ-ACK on the PUSCH to transmit based on the first processing time associated with the UE capability #1.

Furthermore, even in a case of the UE that supports the UE capability #2, the UE (e.g., above case 2) to which the base station does not configure application of the second processing time associated with the UE capability #2 may be configured not to perform UCI on PUSCH to which the second processing time is applied.

Furthermore, the UE for which the second processing time associated with the UE capability #2 is configured to at least UL may apply at least one of the TA command and the TPC command based on the UE capability #2 (second processing time). Alternatively, compared to the UE for which the second processing time is not configured, the UE for which the second processing time is configured may perform control to shorten at least one of an application timing of the TA command and an application timing of the TPC command.

Thus, by applying the second processing time to the processing related to the HARQ-ACK feedback for the PDSCH or the processing related to the PUSCH transmission that is based on the DCI for instructing the UL transmission, it is possible to quickly reflect a communication condition, too, notified by the base station and, consequently, improve communication quality.

### <Aspect 3>

Even when the second processing time associated with the UE capability #2 is configured (or supported) to DL or UL, the second processing time is not applied to specific processing or a specific operation. The specific processing or the specific operation may be read as processing that uses a specific signal or channel.

For example, the UE that has the UE capability #2 does not apply the second processing time to at least one (or all) of SS block detection, a random access procedure (e.g., PRACH transmission), system information (e.g., SIB) and paging processing. The UE may apply the first processing time to these processing.

By applying a common processing time (e.g., first processing time) to processing (or a signal or a channel) that uses, for example, initial access for all UEs, it is possible to suppress an increase in a processing load.

### (Third Aspect)

According to the third aspect, UE capability (or a processing time) is switched and applied.

As described in the second aspect (e.g., aspect 3), it is also thought to apply a second processing time to a given operation, and apply a first processing time to operations other than the given operation. Furthermore, it is also thought to apply the first processing time in a first duration and the second processing time in a second duration to the same operation depending on, for example, communication environment or a timing to configure the second processing time to a UE.

Hence, the UE may be configured to switch between UE capability #1 (or the first processing time) and UE capability #2 (or the second processing time) to apply. For example, the UE dynamically switches between the first processing time and the second processing time to apply to processing (or a signal or a channel) that has a TTI length of the same duration or the same transmission characteristics in a given cell (a CC or a BWP). The processing that has the same transmission characteristics may be processing whose at least one of a mapping type of a Demodulation Reference Signal (e.g., DMRS) and a Transport Block Size (TBS) is the same.

When, for example, a given RNTI is configured (or when the UE receives a downlink control channel (or DCI) to which the given RNTI has been applied), the UE may switch between the UE capability #1 (or the first processing time) and the UE capability #2 (or the second processing time). In one example, when the given RNTI is configured (or when the UE receives DCI to which the given RNTI has been applied), the UE may perform control to apply the UE capability #2 (or the second processing time) in response to reception of the DCI (or a DCI format) to which the RNTI has been applied.

The given RNTI may be, for example, an RNTI used for DCI (PDCCH) for selecting a Modulation and Coding Scheme (MCS) table. Alternatively, the given RNTI may be an RNTI used for DCI for instructing an operation for low latency and ultra reliability (e.g., URLLC).

Furthermore, there may be employed a configuration where, when the given RNTI is not configured, UE capability (the UE capability #1 or the UE capability #2) to be applied is determined semi-statically (by, for example, a higher layer such as an RRC signaling).

Furthermore, when receiving DCI that is transmitted in a Common Search Space (CSS), the UE may apply given UE capability (e.g., UE capability #1 (or the first processing time)). Consequently, the same processing time between the UEs is applied to DCI that is commonly transmitted to the UEs similar to legacy systems, so that it is possible to prevent processing from becoming complicated.

Alternatively, when at least one (or all) of given conditions described in the case 2 of the first aspect is satisfied, the UE may perform control to perform at least one of an operation related to a PDSCH and an operation related to a PUSCH within the second processing time associated with the UE capability #2.

Furthermore, when detecting DCI at a position in a time domain other than in given symbols (e.g., 3 symbols) from a beginning in a given time duration (e.g., slot), the UE capability (or the processing time) to be applied may be switched. When, for example, DCI is detected in or after 4 symbols of a slot, the UE capability #1 (e.g., first processing time) may be switched to the UE capability #2 (e.g., second processing time). Consequently, it is possible to dynamically and flexibly switch the UE capability (or the processing time) according to a time duration in which DCI is transmitted or received. Consequently, it is possible to perform control for using a DCI time duration in which the UE capability switches to the UE capability #1 (e.g., first processing time) when a data size is large, and using a DCI time duration in which the UE capability switches to the UE capability #2 (e.g., second processing time) when low latency is necessary.

Thus, the UE may be configured to apply the UE capability #2 (e.g., second processing time) (switch the first processing time to the second processing time) in a specific situation, and may be configured to apply the UE capability #1 (e.g., first processing time) in other situations.

### <Skip Control>

When switching the UE capability #1 (e.g., first processing time) to the UE capability #2 (e.g., second processing time) for a given operation, the UE may perform control to skip at least part of the given operation (e.g., an operation in a given operation) to which the UE capability #1 is applied. Skip control in a case where the given operation is an operation related to a PDSCH (PDSCH processing), and a case where an operation related to a PUSCH (PUSCH processing/transmission) will be described below.

### [Operation Related to PDSCH]

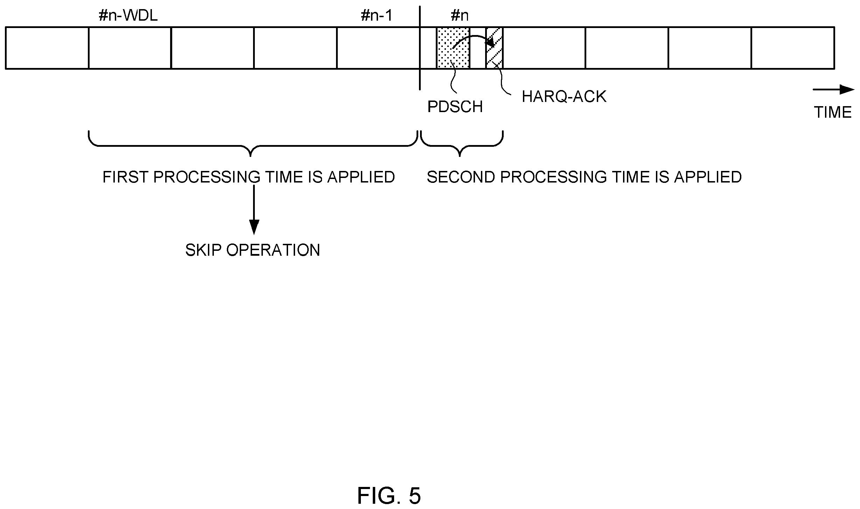

Fig. 5 illustrates one example of a case where the UE capability #1 (e.g., first processing time) is switched to the UE capability #2 (e.g., second processing time) in a slot n. That is, the UE applies the second processing time to HARQ-ACK feedback for a PDSCH received in the slot n. For example, in a slot (the slot n or a slot n+1) corresponding to a slot after given symbols (e.g., 3 symbols), the UE transmits the HARQ-ACK for the PDSCH received in the slot n.

The UE may skip an operation (e.g., decoding processing of a Transport Block (TB)) related to the PDSCH in a given operation among operations related to the PDSCH to which the UE capability #1 is applied. The given duration may be, for example, at least part (or all) of a slot n-W_{DL} to a slot n-1. In addition, the given duration is not limited to this, and may be a duration that is specified in a symbol unit or a subframe unit.

The W_{DL} may be a value that is defined based on UE capability having a value in a range of 0 to k-1. In addition, k corresponds to a DL HARQ process time. Furthermore, the W_{DL} may be a value configured from the base station to the UE.

Fig. 5 illustrates a case as one example where the W_{DL} is 4. In this case, a case also occurs where a timing to transmit HARQ-ACK for a PDSCH received in the slot n-W_{DL} is the slot n. Similarly, a case also occurs where the timing to transmit the HARQ-ACK for the PDSCH received in the slot n-W_{DL}+1 to the slot n-1 is the slot n or a subsequent slot. That is, the UE needs to perform, in the slot n, transmission processing on the HARQ-ACK for the PDSCH received in or before the slot n-1.

On the other hand, when the second processing time is applied to HARQ-ACK feedback for the PDSCH received in the slot n as described above, it is also thought to transmit the HARQ-ACK in the slot n or the slot n+1. Consequently, by skipping an operation (e.g., decoding of a TB) related to the PDSCH in a given operation to which the first processing time is applied, it is possible to reduce a UE processing load, and appropriately transmit HARQ-ACK to which the second processing time is applied. Furthermore, it is possible to prevent contention of transmission timings of the HARQ-ACK to which the first processing time is applied, and the HARQ-ACK to which the second processing time is applied.

The UE may autonomously determine whether or not to apply the skip operation to the given operation, or a duration to which the skip operation is applied. When the operation related to the PDSCH is skipped (e.g., decoding of the TB is skipped), the UE may give notification of that the TB has not been able to be decoded (decoding of the TB has failed) from a physical layer to a higher layer. Alternatively, whether or not to apply the skip operation to the given duration or the duration to which the skip operation is applied may be configured from the base station to the UE, or may be defined in advance by a specification.

Furthermore, the UE may perform control to decrease the number of PDSCHs to be skipped as much as possible by taking into account, for example, a duration to which the second processing time is applied. Furthermore, when skipping the operation related to the PDSCH in the given operation to which the UE capability #1 is applied, the UE may skip operations of all CCs. Consequently, it is possible to reduce the processing load of the UE as much as possible, and, consequently, appropriately perform an operation that uses the UE capability #2. In addition, the UE may be configured not to skip, for example, part of CCs (e.g., a PCell or a PSCell).

Alternatively, when skipping the operation related to the PDSCH in the given operation to which the UE capability #1 is applied, the UE may skip an operation of a given CC (e.g., a CC to which the UE capability #2 is applied). Consequently, it is possible to perform communication without influencing operations of other CCs.

### [Operation Related to PUSCH]

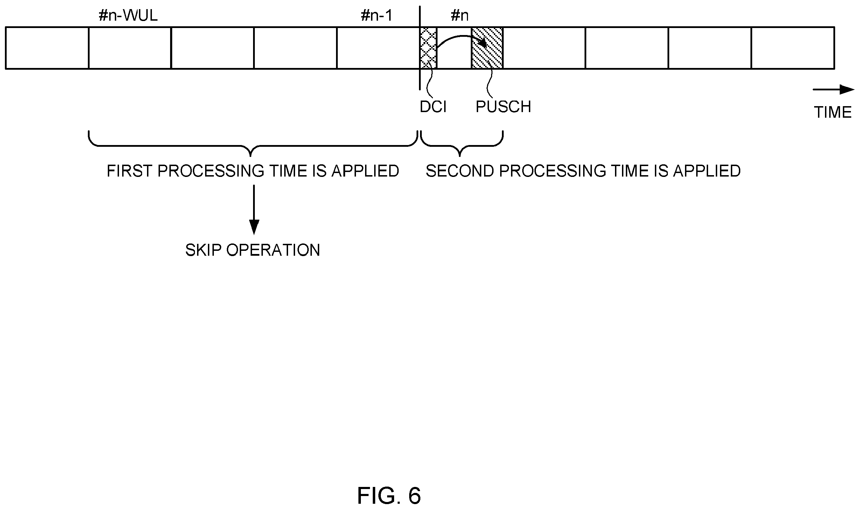

Fig. 6 illustrates one example of a case where the UE capability #1 (e.g., first processing time) is switched to the UE capability #2 (e.g., second processing time) in the slot n. That is, the UE applies the second processing time to PUSCH transmission that is based on DCI received in the slot n. For example, in a slot (the slot n or the slot n+1) corresponding to a slot after given symbols (e.g., 5 symbols), the UE transmits the PUSCH that is based on the DCI received in the slot n.

The UE may skip an operation (e.g., monitoring of the DCI or a PDSCH matching a given DCI format) related to the PUSCH in a given operation among operations related to the PUSCH to which the UE capability #1 is applied. The given duration may be, for example, at least part (or all) of a slot n-W_{UL} to a slot n-1. In addition, the given duration is not limited to this, and may be a duration that is specified in a symbol unit or a subframe unit.

The W_{UL} may be a value that is defined based on UE capability having a value in a range of 0 to k-1. In addition, k corresponds to a UL scheduling time. Furthermore, the W_{UL} may be a value configured from the base station to the UE.

Fig. 6 illustrates a case as one example where the W_{UL} is 4. In this case, a case also occurs where a transmission timing of the PUSCH that is based on the DCI received in the slot n-W_{UL} is the slot n. Similarly, a case also occurs where the PUSCH transmission timing that is based on the DCI received in the slot n-W_{UL}+1 to the slot n-1 is the slot n or a subsequent slot. That is, in the slot n, the UE needs to perform transmission processing on the PUSCH that is based on the DCI received in or before the slot n-1.

On the other hand, when the second processing time is applied to PUSCH transmission that is based on the DCI received in the slot n as described above, it is also thought to transmit the PUSCH in the slot n or the slot n+1. Consequently, by skipping an operation (e.g., decoding of a TB) related to the PUSCH in a given operation to which the first processing time is applied, it is possible to reduce a UE processing load, and appropriately transmit the PUSCH to which the second processing time is applied. Furthermore, it is possible to prevent contention of transmission timings of the PUSCH to which the first processing time is applied, and the PUSCH to which the second processing time is applied.

The UE may autonomously determine whether or not to apply the skip operation to the given operation, or a duration to which the skip operation is applied. When the operation related to the PUSCH is skipped (e.g., monitoring of the PDSCH matching a given DCI format is skipped), the UE may request data from the higher layer based on an issued PUSCH transmission instruction (PUSCH grant). For example, the UE may perform processing similar to that at a time of skipping in an LAA cell that applies listening before transmission.

Alternatively, whether or not to apply the skip operation to the given duration or the duration to which the skip operation is applied may be configured from the base station to the UE, or may be defined in advance by a specification.

Furthermore, the UE may perform control to decrease the number of PUSCHs to be skipped as much as possible by taking into account, for example, a duration to which the second processing time is applied. Furthermore, when skipping the operation related to the PUSCH in the given operation to which the UE capability #1 is applied, the UE may skip the operations of all CCs. Consequently, it is possible to reduce the processing load of the UE as much as possible, and, consequently, appropriately perform an operation that uses the UE capability #2. In addition, the UE may be configured not to skip, for example, part of CCs (e.g., a PCell or a PSCell).

Alternatively, when skipping the operation related to the PUSCH in the given operation to which the UE capability #1 is applied, the UE may skip an operation in a given CC (e.g., a CC to which the UE capability #2 is applied). Consequently, it is possible to perform communication without influencing operations of other CCs.

### (Fourth Aspect)

The fourth aspect will describe, for example, a notification method and a configuration method of UE capability information in a case where communication is performed by using a plurality of cells (e.g., when CA is used). In addition, the following description will describe a case where Carrier Aggregation (CA) is applied. However, the embodiment may be applied likewise to a case of Dual Connectivity (DC), too.

When CA is applied, a UE transmits notifies a base station of at least one of whether or not UE capability #2 (e.g., second processing time) is supported for each SubCarrier Spacing (SCS), whether or not UL is supported, and whether or not DL is supported.

In addition to this, the UE may transmit a CA configuration to which UE capability (e.g., UE capability #2) is configurable. For example, the CA configuration may be a combination of CA bands to which UE capability is configurable, the maximum number of CCs, a combination of subcarrier spacings of a plurality of CCs, slots of a plurality of CCs, or the maximum number of bits of a transport block per 1 ms. The CC may be a CC to which all frame configuration types are applicable.

Furthermore, there may be employed a configuration where, when the UE capability #2 is configured to one of secondary cells included in a PUCCH group, the UE capability #2 is configured to a cell (also referred to as a PUCCH cell or a PUCCH SCell), too, that transmits a PUCCH. In this case, it is possible to apply the UE capability #2 to HARQ-ACK feedback for a PDSCH received in a given SCell to transmit in a PUCCH cell.

The PUCCH group is a group that includes a plurality of cells including a secondary cell associated with a cell (a PCell or a PUCCH SCell) that transmits the PUCCH. For example, UCI of the secondary cell associated with the PUCCH SCell is multiplexed on the PUCCH of the PUCCH SCell to transmit.

Alternatively, there may be employed a configuration where, when the UE capability #2 is configured to one of secondary cells included in the PUCCH group, the UE capability #2 is not necessarily configured to the cell that transmits the PUCCH. When the UE capability #2 is not configured to the PUCCH cell, the UE capability #2 may be applied to HARQ-ACK feedback for a PDSCH received in a given SCell to transmit in the PUCCH cell. Alternatively, there may be employed a configuration where, when the UE capability #2 is not configured to the PUCCH cell, the UE capability #2 is not applied to the HARQ-ACK feedback for the PDSCH received in the given SCell.

Furthermore, the UE capability #2 may be configured to a cell that performs only DL or a cell (also referred to as a Supplemental UpLink Cell) that performs only UL.

There may be employed a configuration where, when the UE capability #2 (e.g., second processing time) is applied, cross-carrier scheduling is not supported. Consequently, when cross-carrier scheduling is performed, scheduling only needs to be controlled by taking UE capability #1 (e.g., first processing time) into account, so that it is possible to prevent processing from becoming complicated.

Alternatively, there may be employed a configuration where, when the UE capability #2 (e.g., second processing time) is applied, cross-carrier scheduling is supported. In this case, there may be employed a configuration where cross-carrier scheduling is applied in the same PUCCH group.

Furthermore, there may be employed a configuration where, when cross-carrier scheduling is supported at a time of application of the UE capability #2, the UE capability #2 is configured to both of a scheduling cell (a cell to which DCI is transmitted) and a cell to be scheduled (a cell to which a PDSCH is transmitted). Alternatively, there may be employed a configuration where the UE capability #1 is configured to the one cell, and the UE capability #2 is configured to the other cell.

The UE reports the maximum number of CSI processes per reporting mode (e.g., a type 1 or 2) as UE capability information. When the UE capability #2 (e.g., second processing time) is applied, there is a case where the maximum number of CSI processes is changed. Hence, when applying the UE capability #2, the UE (or the base station) may update the maximum number of CSI processes based on the UE capability #2. In this regard, the UE capability information is not limited to the number of CSI processes, and there may be employed a configuration where a parameter whose condition is changed when the UE capability #2 is applied is updated as appropriate in response to application of the UE capability #2.

Furthermore, there may be employed a configuration where, when the UE reports given UE capability, concurrent transmission that uses different TTI lengths over different carriers is permitted. There may be employed a configuration where the concurrent transmission is permitted only in a cell group or a PUCCH cell group.

### (Radio Communication System)

The configuration of the radio communication system according to the present embodiment will be described below. This radio communication system uses at least one combination of a plurality of the above aspects to perform communication.

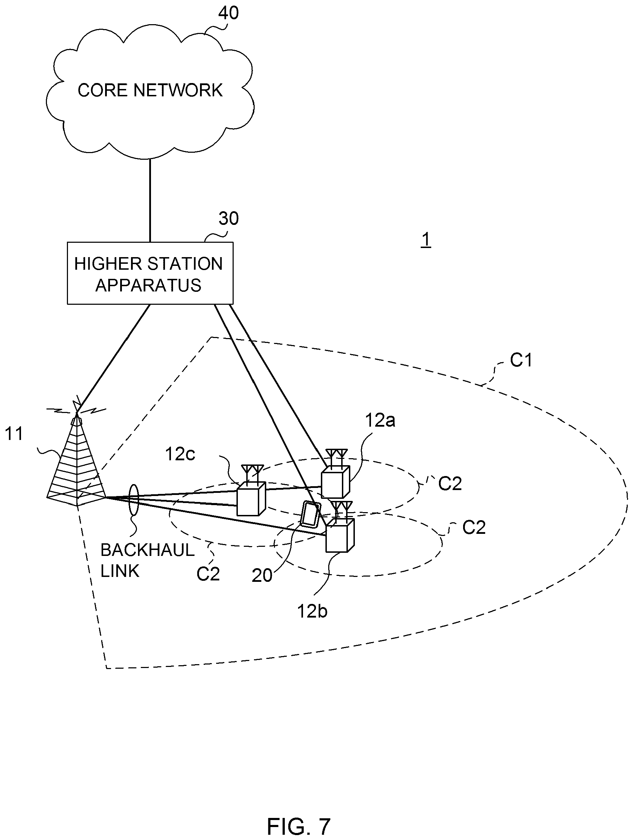

Fig. 7 is a diagram illustrating one example of a schematic configuration of the radio communication system according to the present embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to the aspect illustrated in Fig. 7.

The user terminal 20 can connect with both of the radio base station 11 and the radio base stations 12. The user terminal 20 is assumed to concurrently use the macro cell C1 and the small cells C2 by using CA or DC. Furthermore, the user terminal 20 can apply CA or DC by using a plurality of cells (CCs) (e.g., five CCs or less or six CCs or more).

The user terminal 20 and the radio base station 11 can communicate by using a carrier (also referred to as, for example, a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The numerology may be a communication parameter to be applied to transmission and/or reception of a certain signal and/or channel, and may indicate at least one of, for example, a subcarrier spacing, a bandwidth, a symbol length, a cyclic prefix length, a subframe length, a TTI length, the number of symbols per TTI, a radio frame configuration, filtering processing and windowing processing.

The radio base station 11 and each radio base station 12 (or the two radio base stations 12) can be configured to be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and applies Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and other radio access schemes may be used.

The radio communication system 1 uses, for example, a downlink shared channel (PDSCH: Physical Downlink Shared Channel) shared by each user terminal 20, a broadcast channel (PBCH: Physical Broadcast Channel) and a downlink L1/L2 control channel as downlink channels. For example, user data, higher layer control information and a System Information Block (SIB) are conveyed on the PDSCH. Furthermore, a Master Information Block (MIB) is conveyed on the PBCH.

The downlink L1/L2 control channel includes at least one of downlink control channels (a Physical Downlink Control Channel (PDCCH) and/or an Enhanced Physical Downlink Control Channel (EPDCCH)), a Physical Control Format Indicator Channel (PCFICH), and a Physical Hybrid-ARQ Indicator Channel (PHICH). For example, downlink Control Information (DCI) including scheduling information of the PDSCH and/or the PUSCH is conveyed on the PDCCH.

In addition, the scheduling information may be notified by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses, for example, an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. For example, user data and higher layer control information are conveyed on the PUSCH. Furthermore, for example, downlink radio link quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys, for example, a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys, for example, a Sounding Reference Signal (SRS) and a DeModulation Reference Signal (DMRS) as uplink reference signals. In this regard, the DMRS may be referred to as a user terminal-specific reference signal (UE-specific reference signal). Furthermore, a reference signal to be conveyed is not limited to these.

### <Radio Base Station>

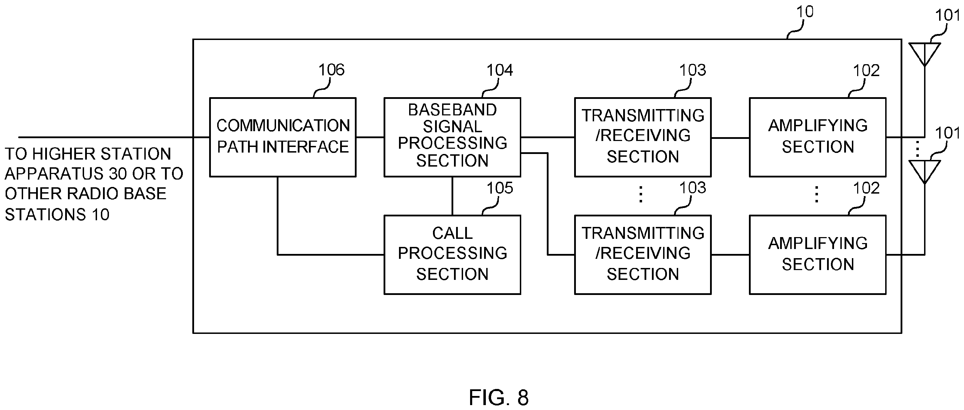

Fig. 8 is a diagram illustrating one example of an overall configuration of the radio base station according to the present embodiment. The radio base station 10 includes pluralities of transmitting/receiving antennas 101, amplifying sections 102 and transmitting/receiving sections 103, a baseband signal processing section 104, a call processing section 105 and a communication path interface 106. In this regard, the radio base station 10 only needs to be configured to include one or more of each of the transmitting/receiving antennas 101, the amplifying sections 102 and the transmitting/receiving sections 103.

User data transmitted from the radio base station 10 to the user terminal 20 on downlink is input from the higher station apparatus 30 to the baseband signal processing section 104 via the communication path interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmitting/receiving section 103. Furthermore, the baseband signal processing section 104 performs transmission processing such as channel coding and inverse fast Fourier transform on a downlink control signal, too, and transfers the downlink control signal to each transmitting/receiving section 103.

Each transmitting/receiving section 103 converts a baseband signal precoded and output per antenna from the baseband signal processing section 104 into a radio frequency range, and transmits a radio frequency signal. The radio frequency signal subjected to frequency conversion by each transmitting/receiving section 103 is amplified by each amplifying section 102, and is transmitted from each transmitting/receiving antenna 101. The transmitting/receiving sections 103 can be composed of transmitters/receivers, transmitting/receiving circuits or transmitting/receiving apparatuses described based on a common knowledge in a technical field according to the present disclosure. In this regard, each transmitting/receiving section 103 may be composed as an integrated transmitting/receiving section or may be composed of a transmitting section and a receiving section.

Meanwhile, each amplifying section 102 amplifies a radio frequency signal received by each transmitting/receiving antenna 101 as an uplink signal. Each transmitting/receiving section 103 receives the uplink signal amplified by each amplifying section 102. Each transmitting/receiving section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the communication path interface 106. The call processing section 105 performs, for example, call processing (such as configuration and release) of a communication channel, state management of the radio base station 10 and radio resource management.

The communication path interface 106 transmits and receives signals to and from the higher station apparatus 30 via a given interface. Furthermore, the communication path interface 106 may transmit and receive (backhaul signaling) signals to and from the another radio base station 10 via an inter-base station interface (e.g., optical fibers compliant with the Common Public Radio Interface (CPRI) or the X2 interface).

In addition, each transmitting/receiving section 103 may further include an analog beam forming section that performs analog beam forming. The analog beam forming section can be composed of an analog beam forming circuit (e.g., a phase shifter or a phase shift circuit) or an analog beam forming apparatus (e.g., a phase shift instrument) described based on the common knowledge in the technical field according to the present invention. Furthermore, each transmitting/receiving antenna 101 can be composed of an array antenna, for example. Furthermore, each transmitting/receiving section 103 is configured to be able to apply single BF and multiple BF.

Each transmitting/receiving section 103 may transmit a signal by using a transmission beam, or may receive a signal by using a reception beam. Each transmitting/receiving section 103 may transmit and/or receive a signal by using a given beam determined by a control section 301.

Furthermore, each transmitting/receiving section 103 transmits a Downlink (DL) signal (including at least one of a DL data signal (downlink shared channel), a DL control signal (downlink control channel) and a DL reference signal) to the user terminal 20, and receives an Uplink (UL) signal (including at least one of a UL data signal, a UL control signal and a UL reference signal) from the user terminal 20.

Furthermore, each transmitting/receiving section 103 receives UE capability information (e.g., UE capability #2) that indicates that a second processing time shorter than a first processing time is supported for a given operation. Furthermore, when receiving information related to the UE capability #2, each transmitting/receiving section 103 may transmit information for configuring the second processing time associated with the UE capability #2. Furthermore, each transmitting/receiving section 103 may receive a (Re)configuration complete message.

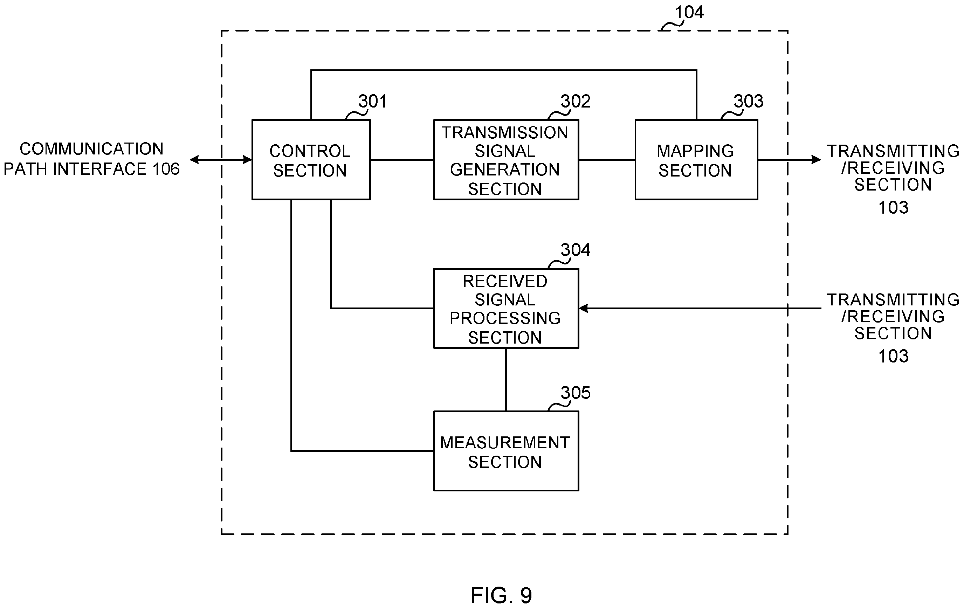

Fig. 9 is a diagram illustrating one example of a function configuration of the radio base station according to the present embodiment. In addition, this example mainly illustrates function blocks of characteristic portions according to the present embodiment, and may assume that the radio base station 10 includes other function blocks, too, that are necessary for radio communication.

The baseband signal processing section 104 includes at least the control section (scheduler) 301, a transmission signal generation section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present disclosure.

The control section 301 controls, for example, signal generation of the transmission signal generation section 302 and signal allocation of the mapping section 303. Furthermore, the control section 301 controls, for example, signal reception processing of the received signal processing section 304 and signal measurement of the measurement section 305.

The control section 301 controls scheduling (e.g., resource allocation) of system information, a downlink data signal (e.g., a signal that is transmitted on the PDSCH), and a downlink control signal (e.g., a signal that is transmitted on the PDCCH and/or the EPDCCH and is, for example, transmission acknowledgement information). Furthermore, the control section 301 controls, for example, generation of a downlink control signal and a downlink data signal based on a result obtained by deciding whether or not it is necessary to perform retransmission control on an uplink data signal.

The control section 301 may control scheduling by taking into account the second processing time associated with the UE capability #2 based on the UE capability information (e.g., UE capability #2) transmitted from the UE.

The transmission signal generation section 302 generates a downlink signal (such as a downlink control signal, a downlink data signal or a downlink reference signal) based on an instruction from the control section 301, and outputs the downlink signal to the mapping section 303. The transmission signal generation section 302 can be composed of a signal generator, a signal generating circuit or a signal generating apparatus described based on the common knowledge in the technical field according to the present disclosure.

The transmission signal generation section 302 generates, for example, a DL assignment for giving notification of downlink data allocation information, and/or a UL grant for giving notification of uplink data allocation information based on the instruction from the control section 301. The DL assignment and the UL grant are both DCI, and conform to a DCI format. Furthermore, the transmission signal generation section 302 performs, for example, encoding processing and modulation processing on the downlink data signal according to a code rate and a modulation scheme determined based on Channel State Information (CSI) from each user terminal 20.

The mapping section 303 maps the downlink signal generated by the transmission signal generation section 302, on given radio resources based on the instruction from the control section 301, and outputs the downlink signal to each transmitting/receiving section 103. The mapping section 303 can be composed of a mapper, a mapping circuit or a mapping apparatus described based on the common knowledge in the technical field according to the present disclosure.

The received signal processing section 304 performs reception processing (e.g., demapping, demodulation and decoding) on a received signal input from each transmitting/receiving section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

### <User Terminal>

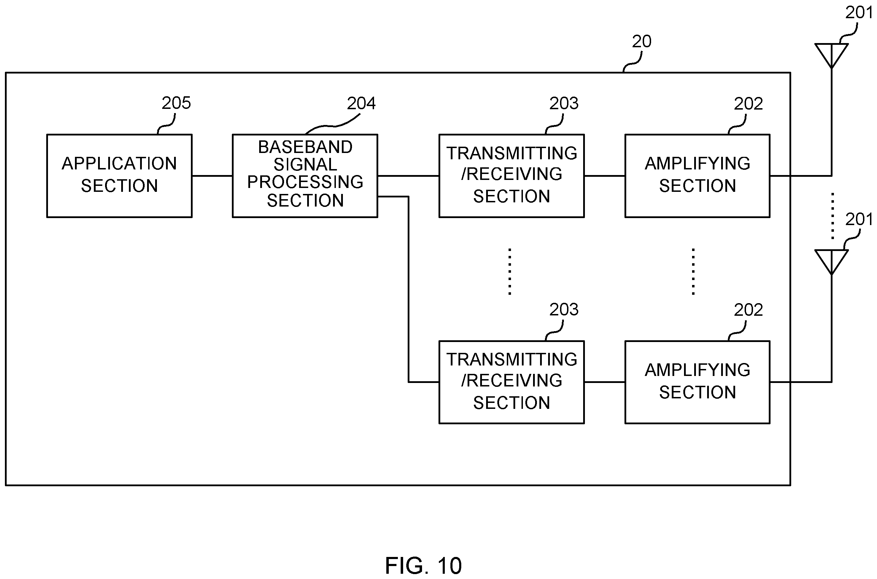

Fig. 10 is a diagram illustrating one example of an overall configuration of the user terminal according to the present embodiment. The user terminal 20 includes pluralities of transmitting/receiving antennas 201, amplifying sections 202 and transmitting/receiving sections 203, a baseband signal processing section 204 and an application section 205. In this regard, the user terminal 20 only needs to be configured to include one or more of each of the transmitting/receiving antennas 201, the amplifying sections 202 and the transmitting/receiving sections 203.

Each amplifying section 202 amplifies a radio frequency signal received at each transmitting/receiving antenna 201. Each transmitting/receiving section 203 receives a downlink signal amplified by each amplifying section 202. Each transmitting/receiving section 203 performs frequency conversion on the received signal into a baseband signal, and outputs the baseband signal to the baseband signal processing section 204. The transmitting/receiving sections 203 can be composed of transmitters/receivers, transmitting/receiving circuits or transmitting/receiving apparatuses described based on the common knowledge in the technical field according to the present disclosure. In this regard, each transmitting/receiving section 203 may be composed as an integrated transmitting/receiving section or may be composed of a transmitting section and a receiving section.

The baseband signal processing section 204 performs, for example, FFT processing, error correcting decoding and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs, for example, retransmission control transmission processing (e.g., HARQ transmission processing), channel coding, precoding, Discrete Fourier Transform (DFT) processing and IFFT processing on the uplink user data, and transfers the uplink user data to each transmitting/receiving section 203.

Each transmitting/receiving section 203 converts the baseband signal output from the baseband signal processing section 204 into a radio frequency range, and transmits a radio frequency signal. The radio frequency signal subjected to the frequency conversion by each transmitting/receiving section 203 is amplified by each amplifying section 202, and is transmitted from each transmitting/receiving antenna 201.

In addition, each transmitting/receiving section 203 may further include an analog beam forming section that performs analog beam forming. The analog beam forming section can be composed of an analog beam forming circuit (e.g., a phase shifter or a phase shift circuit) or an analog beam forming apparatus (e.g., a phase shift instrument) described based on the common knowledge in the technical field according to the present invention. Furthermore, each transmitting/receiving antenna 201 can be composed of an array antenna, for example. Furthermore, each transmitting/receiving section 203 is configured to be able to apply single BF and multiple BF.

Each transmitting/receiving section 203 may transmit a signal by using a transmission beam, or may receive a signal by using a reception beam. Each transmitting/receiving section 203 may transmit and/or receive a signal by using a given beam determined by a control section 401.

Furthermore, each transmitting/receiving section 203 receives the Downlink (DL) signal (including at least one of the DL data signal (downlink shared channel), the DL control signal (downlink control channel) and the DL reference signal) from the radio base station 10, and transmits the Uplink (UL) signal (including at least one of the UL data signal, the UL control signal and the UL reference signal) to the radio base station 10.

Furthermore, each transmitting/receiving section 203 transmits the UE capability information (e.g., UE capability #2) that indicates that the second processing time shorter than the first processing time is supported for the given operation. Furthermore, when transmitting the information related to the UE capability #2, each transmitting/receiving section 203 may receive the configuration information of the second processing time associated with the UE capability #2. Furthermore, each transmitting/receiving section 203 may transmit a (Re)configuration complete message.

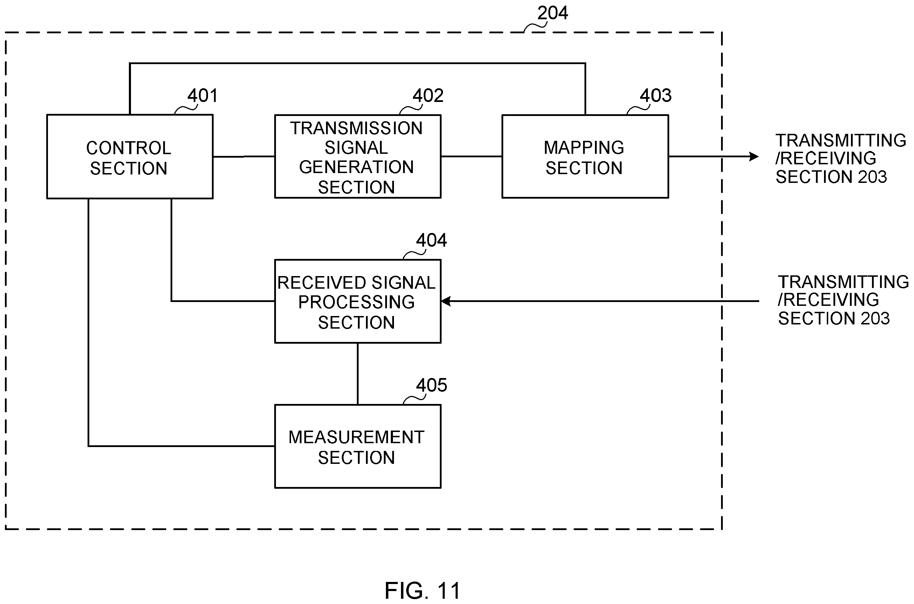

Fig. 11 is a diagram illustrating one example of a function configuration of the user terminal according to the present embodiment. In addition, this example mainly illustrates function blocks of characteristic portions according to the present embodiment, and may assume that the user terminal 20 includes other function blocks, too, that are necessary for radio communication.

The baseband signal processing section 204 of the user terminal 20 includes at least the control section 401, a transmission signal generation section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present disclosure.

The control section 401 controls, for example, signal generation of the transmission signal generation section 402 and signal allocation of the mapping section 403. Furthermore, the control section 401 controls, for example, signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

The control section 401 performs control to apply the second processing time to the given operation after the UE capability information is transmitted or after application of the second processing time is configured.

Furthermore, when the application of the second processing time is configured, the control section 401 may apply the first processing time to an operation other than the given operation.

Furthermore, the control section 401 may switch between the first processing time and the second processing time based on downlink control information.

Furthermore, when switching a processing time to be applied to the given operation from the first processing time to the second processing time, the control section 401 may perform control to skip the given operation to which the first processing time is applied in a given operation.

Furthermore, when communication is performed by using a plurality of cells, the control section 401 may separately report the application of the second processing time per cell or per given cell group. That is, when communication is performed by using a plurality of cells, the application of the second processing time may be separately configured per cell or per given cell group.

The transmission signal generation section 402 generates an uplink signal (such as an uplink control signal, an uplink data signal or an uplink reference signal) based on an instruction from the control section 401, and outputs the uplink signal to the mapping section 403. The transmission signal generation section 402 can be composed of a signal generator, a signal generating circuit or a signal generating apparatus described based on the common knowledge in the technical field according to the present invention.

The transmission signal generation section 402 generates, for example, an uplink control signal related to transmission acknowledgement information and Channel State Information (CSI) based on the instruction from the control section 401. Furthermore, the transmission signal generation section 402 generates an uplink data signal based on the instruction from the control section 401. When, for example, the downlink control signal notified from the radio base station 10 includes a UL grant, the transmission signal generation section 402 is instructed by the control section 401 to generate an uplink data signal.

The mapping section 403 maps the uplink signal generated by the transmission signal generation section 402, on radio resources based on the instruction from the control section 401, and outputs the uplink signal to each transmitting/receiving section 203. The mapping section 403 can be composed of a mapper, a mapping circuit or a mapping apparatus described based on the common knowledge in the technical field according to the present disclosure.

The received signal processing section 404 performs reception processing (e.g., demapping, demodulation and decoding) on the received signal input from each transmitting/receiving section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present disclosure. Furthermore, the received signal processing section 404 can compose the receiving section according to the present disclosure.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

### (Hardware Configuration)

In addition, the block diagrams used to describe the above embodiment illustrate blocks in function units. These function blocks (components) are realized by an arbitrary combination of at least one of hardware and software. Furthermore, a method for realizing each function block is not limited in particular. That is, each function block may be realized by using one physically or logically coupled apparatus or may be realized by using a plurality of these apparatuses formed by connecting two or more physically or logically separate apparatuses directly or indirectly (by using, for example, wired connection or radio connection). Each function block may be realized by combining software with the above one apparatus or a plurality of above apparatuses.

In this regard, the functions include judging, determining, deciding, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as a transmitting unit or a transmitter. As described above, the method for realizing each function block is not limited in particular.

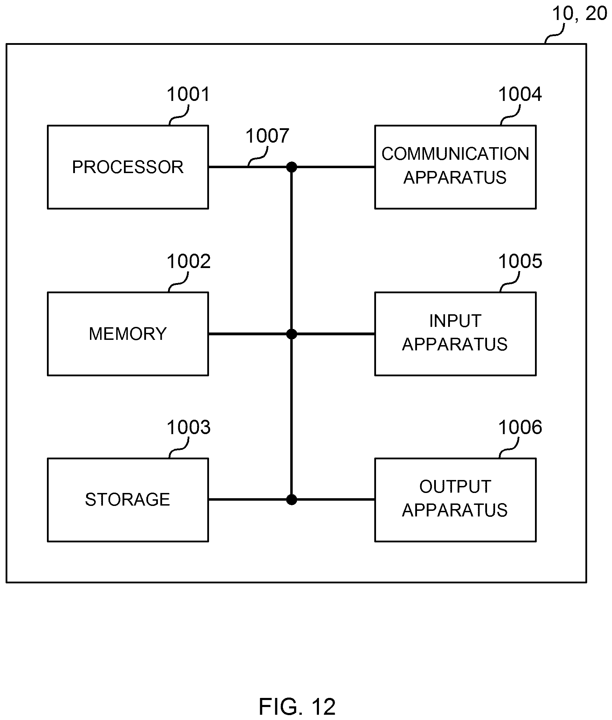

For example, the base station and the user terminal according to the one embodiment of the present disclosure may function as computers that perform processing of the radio communication method according to the present disclosure. Fig. 12 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the base station 10 and the user terminal 20 may be configured to include one or a plurality of apparatuses illustrated in Fig. 12 or may be configured without including part of the apparatuses.

For example, Fig. 12 illustrates the only one processor 1001. However, there may be a plurality of processors. Furthermore, processing may be executed by 1 processor or processing may be executed by 2 or more processors concurrently or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads, for example, programs (program codes), a software module or data from at least one of the storage 1003 and the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmitting/receiving device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmitting/receiving antennas 101 (201), amplifying sections 102 (202), transmitting/receiving sections 103 (203) and communication path interface 106 may be realized by the communication apparatus 1004. Each transmitting/receiving section 103 may be physically or logically separately implemented as a transmitting section 103a and a receiving section 103b.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these types of hardware.

### (Modified Example)

In addition, each term that has been described in the present disclosure and each term that is necessary to understand the present disclosure may be replaced with terms having identical or similar meanings. For example, at least one of a channel and a symbol may be a signal (signaling). Furthermore, a signal may be a message. A reference signal can be also abbreviated as an RS (Reference Signal), or may be referred to as a pilot or a pilot signal depending on standards to be applied. Furthermore, a Component Carrier (CC) may be referred to as a cell, a frequency carrier and a carrier frequency.

A radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies.

The slot may include a plurality of mini slots. Each mini slot may include one or a plurality of symbols in the time domain. Furthermore, the mini slot may be referred to as a subslot. The mini slot may include a smaller number of symbols than those of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a Transmission Time Interval (TTI), a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or codeword, or may be a processing unit of scheduling or link adaptation. In addition, when the TTI is given, a time period (e.g., the number of symbols) in which a transport block, a code block or a codeword is actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe, a long subframe or a slot. A TTI shorter than the general TTI may be referred to as a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as a partial bandwidth) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a BWP for UL (UL BWP) and a BWP for DL (DL BWP). One or a plurality of BWPs in 1 carrier may be configured to the UE.

At least one of the configured BWPs may be active, and the UE may not assume that a given signal/channel is transmitted and received outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspects/embodiment described in the present disclosure and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used.

In the present disclosure, terms such as "precoding", a "precoder", a "weight (precoding weight)", "Quasi-Co-Location (QCL)", "transmission power", "phase rotation", an "antenna port", an "antenna port group", a "layer", "the number of layers", a "rank", a "beam", a "beam width", a "beam angle", an "antenna", an "antenna element" and a panel" can be interchangeably used.

In the present disclosure, terms such as a "base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as a transmission apparatus, a reception apparatus or a communication apparatus. In addition, at least one of the base station and the mobile station may be a device mounted on a movable body or the movable body itself. The movable body may be a vehicle (e.g., a car or an airplane), may be a movable body (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs), yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are expanded based on these systems. Furthermore, a plurality of systems may be combined (e.g., a combination of LTE or LTE-A and 5G) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be regarded to "decide (determine)" judging, calculating, computing, processing, deriving, investigating, looking up, search and inquiry (e.g., looking up in a table, a database or another data structure), and ascertaining.

Furthermore, "deciding (determining)" may be regarded to "decide (determine)" receiving (e.g., receiving information), transmitting (e.g., transmitting information), input, output and accessing (e.g., accessing data in a memory).

Furthermore, "deciding (determining)" may be regarded to "decide (determine)" resolving, selecting, choosing, establishing and comparing. That is, "deciding (determining)" may be regarded to "decide (determine)" some operation.

Furthermore, "deciding (determining)" may be read as "assuming", "expecting" and "considering".

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

When the words "include" and "including" and modifications of these words are used in the present disclosure, these words intend to be comprehensive similar to the word "comprising". Furthermore, the word "or" used in the present disclosure intends not to be an exclusive OR.

When, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

## Claims

1. A user terminal comprising:
a transmitting section that transmits UE capability information that indicates that a second processing time shorter than a first processing time is supported for a given operation; and
a control section that applies the second processing time to the given operation after the UE capability information is transmitted or after the application of the second processing time is configured.

2. The user terminal according to claim 1, wherein, when the application of the second processing time is configured, the control section applies the first processing time to an operation other than the given operation.

3. The user terminal according to claim 1 or 2, wherein the control section switches between the first processing time and the second processing time based on downlink control information.

4. The user terminal according to any one of claims 1 to 3, wherein, when a processing time to be applied to the given operation is switched from the first processing time to the second processing time, the control section skips in a given duration the given operation to which the first processing time is applied.

5. The user terminal according to any one of claims 1 to 4, wherein, when communication is performed by using a plurality of cells, the application of the second processing time is separately configured per cell or per given cell group.

6. A radio communication method of a user terminal comprising:
transmitting UE capability information that indicates that a second processing time shorter than a first processing time is supported for a given operation; and
applying the second processing time to the given operation after the UE capability information is transmitted or after the application of the second processing time is configured.
